# EUROPEAN PATENT APPLICATION

(11) **EP 2 306 184 A1**
(43) Date of publication of application: **06.04.2011**
(21) Application number: 09797992.6
(22) Date of filing: 17.07.2009
(51) Int. Cl.: G01N 29/04

(54) **ULTRASONIC FLAW DETECTOR**

(30) Priority: 17.07.2008 JP 2008185894
(71) Applicant: Mitsubishi Heavy Industries, Ltd., Tokyo 108-8215 (JP)
(72) Inventor: NINOMIYA Takuji, Nagoya-shi Aichi 455-8515 (JP); NAKAMURA Ryuichi, Nagoya-shi Aichi 455-8515 (JP); FUJISE Morimasa, Nagoya-shi Aichi 455-8515 (JP); SAIHARA Seishi, Nagoya-shi Aichi 455-8515 (JP)
(74) Representative: Henkel, Feiler & Hänzel
(86) International application number: PCT/JP2009/062971
(87) International publication number: WO 2010/008068

(57) **Abstract**

An ultrasonic test equipment includes a water tank for storing ultrasonic medium, an ultrasonic probe provided in the water tank, an ultrasonic medium temperature sensor configured to measure a first temperature of the ultrasonic medium, a test object temperature sensor configured to measure a second temperature of a test object, and a temperature control device. The temperature control device heats the ultrasonic medium or cools the test object such that the first temperature becomes equal to or higher than the second temperature. Gas bubbles are prevented from emerging on a surface of the test object.

## Description

### Technical Field

The present invention relates to an ultrasonic test equipment and an ultrasonic test method, and in particular relates to a water immerse type ultrasonic test equipment and a water immerse type ultrasonic test method.

### Background Art

There is a problem that gas bubbles adhered to a surface of a probe of a water immerse type ultrasonic test equipment or a surface of a test object may disturb a flaw detection.

To cope with this problem, Japanese Patent Publication (JP-A-Heisei 11-211702) discloses a water immerse type ultrasonic test equipment that includes an ultrasonic detector and a gas bubble elimination device. The ultrasonic detector includes a box-type jacket and a probe mounted to the jacket. The Jacket has an opening and is provided with a water-supply port and a water-drain port. The jacket is water-tightly mounted to a test object at a brim of the opening. The gas bubble elimination device includes a degas tank and a gas-insulated cooling device. The degas tank includes a heater for heating water to discharge dissolved air to the atmosphere. The gas-insulated cooling device is supplied with the water including decreased dissolved air from the degas tank, and supplies the water through the water-supply port to the jacket after cooling the water in a gas-insulated condition. According to the water immerse type ultrasonic test equipment, dissolved air in the water filling a space between the probe and the test object can be suppressed to a low level. Thus, gas bubbles can be prevented from emerging on a surface of the probe or a surface of the test object.

Apart from the problem of gas bubbles as mentioned above, Japanese Patent Publication (JP-A-Heisei 6-66545) discloses a water immerse type ultrasonic dimension measuring device. A measurement target member is heat-treated and is introduced to the water immerse type ultrasonic dimension measuring device before the member is sufficiently cooled, and an outer dimension of the member is measured. A temperature-measuring probe for measuring a surface temperature of the measurement target member is provided at an introduction side of the water immerse type ultrasonic dimension measuring device. A water temperature meter, a heating device and a cooling device are provided in a water storage tank for storing water as ultrasonic transfer medium. The heating device or the cooling device is controlled such that a water temperature in the water storage tank becomes equal to the surface temperature of the measurement target member. According to the water immerse type ultrasonic dimension measuring device, the distribution of water temperature between the measurement target member and a measuring probe become uniform. Therefore, the outer dimension of the measurement target member can be accurately measured.

### Citation List

### Patent literature

Patent literature 1: Japanese Patent Publication (JP-A-Heisei 11-211702)
Patent literature 2: Japanese Patent Publication (JP-A-Heisei 6-66545)

### Summary of Invention

An object of the present invention is to provide an ultrasonic test equipment and an ultrasonic test method capable of preventing gas bubbles from emerging on a surface of an test object.

In a first aspect of the present invention, an ultrasonic test equipment includes: a water tank for storing ultrasonic medium; an ultrasonic probe provided in the water tank; an ultrasonic medium temperature sensor configured to measure a first temperature of the ultrasonic medium; a test object temperature sensor configured to measure a second temperature of an test object; and a temperature control device. The temperature control device heats the ultrasonic medium or cools the test object such that the first temperature becomes equal to or higher than the second temperature.

It is preferred that the temperature control device includes a refrigerator configured to cool heat transfer medium for depriving the test object of heat.

It is preferred that the test object is carried from a pre-room into a test room in which the water tank is arranged. In this case, the heat transfer medium is air in the pre-room.

It is preferred that the temperature control device includes a cooling water tank for storing cooling water as the heat transfer medium.

It is preferred that the temperature control device includes a shower configured to pour cooling water as the heat transfer medium on the test object.

It is preferred that the temperature control device includes an electric heater or a heat pump for heating the ultrasonic medium.

It is preferred that the temperature control device includes a solar water heater configured to heat the ultrasonic medium.

It is preferred that the temperature control device includes a reactor in which a chemical reaction occurs. The reactor supplies the ultrasonic medium with heat generated by the chemical reaction.

In a second aspect of the present invention, an ultrasonic test method includes: measuring a first temperature of ultrasonic medium stored in a water tank; measuring a second temperature of an test object; heating the ultrasonic medium or cooling the test object such that the first temperature becomes equal to or higher than the second temperature; immersing the test object in the ultrasonic medium; and performing an ultrasonic test of the test object.

It is preferred that the ultrasonic test method further includes cooling heat transfer medium for depriving the test object of heat.

It is preferred that the heat transfer medium is air in a pre-room. It is preferred that the ultrasonic test method further includes carrying the test object from the pre-room into a test room in which the water tank is arranged.

It is preferred that the heat transfer medium is cooling water stored in a cooling water tank. It is preferred that the heating of the ultrasonic medium or the cooling of the test object includes immersing the test object in the cooling water.

It is preferred that the heat transfer medium is cooling water. It is preferred that the heating of the ultrasonic medium or the cooling of the test object includes pouring the cooling water on the test object.

It is preferred that the heating of the ultrasonic medium or the cooling of the test object includes heating the ultrasonic medium.

It is preferred that the ultrasonic medium is heated by using solar heat in the heating the ultrasonic medium.

It is preferred that the ultrasonic medium is supplied with heat generated by a chemical reaction in the heating the ultrasonic medium.

According to the present invention, an ultrasonic test equipment and an ultrasonic test method capable of preventing gas bubbles from emerging on a surface of an test object are provided.

### Brief Description of Drawings

The above and other objects, advantages, and features of the present invention will be more apparent from the description of embodiments taken in conjunction with the accompanying drawings, in which:
Fig. 1 is a schematic diagram of an ultrasonic test equipment according to a first embodiment of the present invention;
Fig. 2 is a schematic diagram of an ultrasonic test equipment according to a second embodiment of the present invention;
Fig. 3 is a schematic diagram of an ultrasonic test equipment according to a third embodiment of the present invention;
Fig. 4 is a schematic diagram of an ultrasonic test equipment according to a fourth embodiment of the present invention;
Fig. 5 is a plan view showing an arrangement of a water tank for ultrasonic test and a cooling device of the ultrasonic test equipment according to the fourth embodiment;
Fig. 6 is a schematic diagram of a cooling device of an ultrasonic test equipment according to a fifth embodiment of the present invention; and
Fig. 7 is a schematic diagram of a cooling device of an ultrasonic test equipment according to a sixth embodiment of the present invention.

### Description of Embodiments

With reference to the accompanying drawings, embodiments of an ultrasonic test equipment and an ultrasonic test method according to the present invention will be described below.

### (First Embodiment)

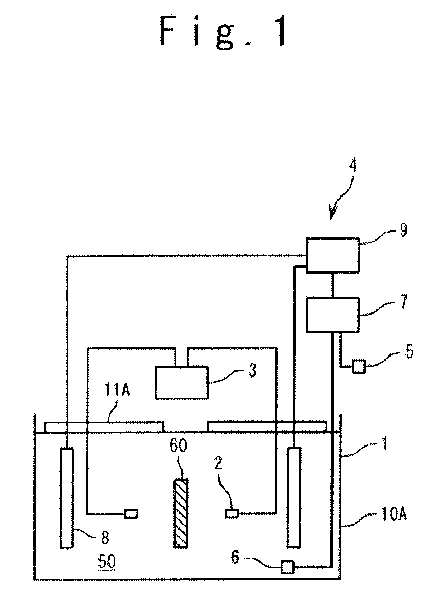

Fig. 1 shows an ultrasonic test equipment according to a first embodiment of the present invention. The ultrasonic test equipment according to the present embodiment includes: a water tank for ultrasonic test, 1 that stores ultrasonic medium 50 as liquid; an ultrasonic probe 2 provided in the water tank for ultrasonic test, 1; an information processing device 3; a temperature control device 4; a test object temperature sensor 5; and an ultrasonic medium temperature sensor 6 provided in the water tank for ultrasonic test, 1. The ultrasonic medium 50 is, for example, water. Each of the test object temperature sensor 5 and the ultrasonic medium temperature sensor 6 is a thermocouple as a contact-type temperature sensor. The temperature control device 4 includes a temperature comparing device 7, a heating device 8 provided in the water tank for ultrasonic test, 1, and a control device 9. The heating device 8 is an electric heater or a heat pump for heating the ultrasonic medium 50 by using electric power.

An ultrasonic test method according to the present embodiment is described below.

Before a test object 60 is immersed in the ultrasonic medium 50, the test object temperature sensor 5 measures an test object temperature as a surface temperature of the test object 60 and the ultrasonic medium temperature sensor 6 measures a medium temperature as a temperature of the ultrasonic medium 50. The temperature comparing device 7 detects a high-low relation between the test object temperature and the medium temperature based on a direction of an electromotive force caused by the test object temperature sensor 5 and the ultrasonic medium temperature sensor 6. The control device 9 controls the heating device 8 based on the high-low relation between the test object temperature and the medium temperature such that the medium temperature becomes equal to or higher than the test object temperature. The heating device 8 heats the ultrasonic medium 50 such that the medium temperature becomes equal to or higher than the test object temperature.

After the medium temperature becomes equal to or higher than the test object temperature, the test object 60 is immersed in the ultrasonic medium 50.

Under the condition that the test object 60 is being immersed in the ultrasonic medium 50, the ultrasonic test equipment according to the present embodiment performs an ultrasonic test of the test object 60. More specifically, the ultrasonic probe 2 outputs ultrasonic waves towards the test object 60 and converts ultrasonic waves from the test object 60 into electric signals. The information processing device 3 outputs a result of the ultrasonic test based on the electric signals.

In the present embodiment, when the test object 60 is immersed in the ultrasonic medium 50, the temperature of the ultrasonic medium 50 is equal to or higher than the surface temperature of the test obj ect 60. Therefore, the ultrasonic medium 50 in the vicinity of the test object 60 is cooled by the test obj ect 60 such that the temperature of the ultrasonic medium 50 is lowered and a saturation concentration of dissolved gas is increased therein. As a result, gas bubbles are prevented from emerging on a surface of the test object 60. The effect of preventing gas bubbles from emerging on the surface of the test obj ect 60 is maintained during the ultrasonic test.

In the present embodiment, it is preferred that the water tank for ultrasonic test, 1 is provided with a heat insulating member 10A. The heat insulating member 10A reduces energy for heating the ultrasonic medium 50.

Moreover, it is preferred that a floating member 11A is floated on the ultrasonic medium 50. The floating member 11A suppresses evaporation at a liquid surface of the ultrasonic medium 50. Since heat dissipation from the ultrasonic medium 50 due to heat of evaporation is suppressed, energy for heating the ultrasonic medium 50 is reduced. It is preferred to use expanded polystyrene as the floating member 11A. The expanded polystyrene has a heat insulating property and does not scratch the test object 60.

### (Second Embodiment)

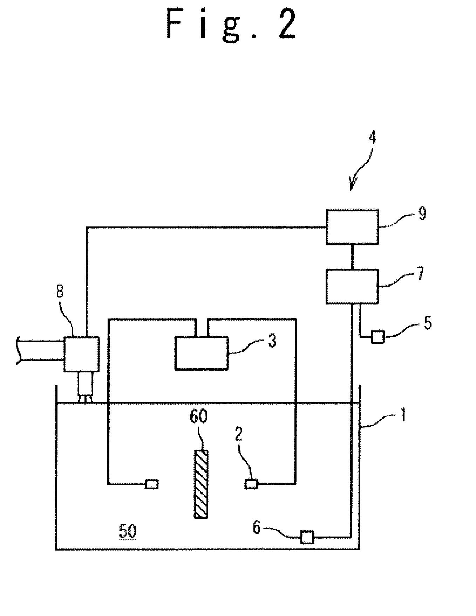

Fig. 2 shows an ultrasonic test equipment according to a second embodiment of the present invention. The ultrasonic test equipment according to the present embodiment includes: a water tank for ultrasonic test, 1 that stores ultrasonic medium 50 as liquid; an ultrasonic probe 2 provided in the water tank for ultrasonic test, 1; an information processing device 3; a temperature control device 4; a test object temperature sensor 5; and an ultrasonic medium temperature sensor 6 provided in the water tank for ultrasonic test, 1. The temperature control device 4 includes a temperature comparing device 7, a heating device 8 and a control device 9. In the present embodiment, the heating device 8 is a solar water heater that is provided outside the water tank for ultrasonic test, 1. The ultrasonic medium 50 circulates between the water tank for ultrasonic test, 1 and the heating device 8. Alternatively, the ultrasonic medium 50 flows through the heating device 8 and then flows into the water tank for ultrasonic test, 1, and the ultrasonic medium 50 that flows out of the water tank for ultrasonic test, 1 does not return to the heating device 8. The heating device 8 heats the ultrasonic medium 50 by using solar heat. Since solar heat is used, emission of carbon dioxide is reduced.

The ultrasonic test equipment and an ultrasonic test method according to the present embodiment are the same as the ultrasonic test equipment and the ultrasonic test method according to the first embodiment except the points described above.

In the present embodiment, each of the test object temperature sensor 5 and the ultrasonic medium temperature sensor 6 may be a mercury thermometer, an alcohol thermometer or a thermistor as a contact-type temperature sensor. In this case, the temperature comparing device 7 displays the test object temperature and the medium temperature such that those can be compared. An operator manually operates the control device 9 based on a high-low relation between the test obj ect temperature and the medium temperature to cause the heating device 8 to heat the ultrasonic medium 50 such that the medium temperature becomes equal to or higher than the test obj ect temperature.

### (Third Embodiment)

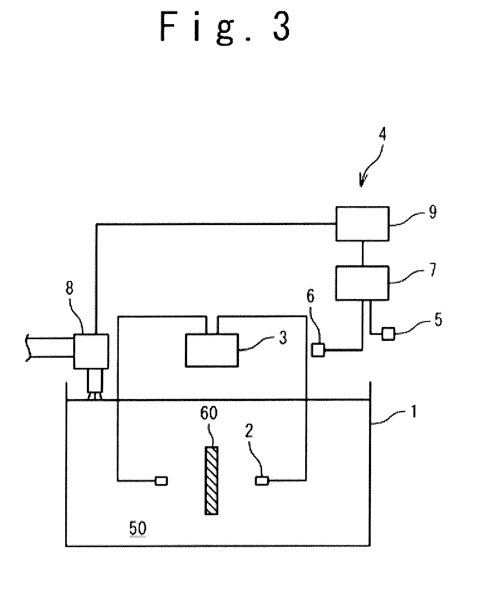

Fig. 3 shows an ultrasonic test equipment according to a third embodiment. The ultrasonic test equipment according to the present embodiment includes: a water tank for ultrasonic test, 1 that stores ultrasonic medium 50 as liquid; an ultrasonic probe 2 provided in the water tank for ultrasonic test, 1; an information processing device 3; a temperature control device 4; a test object temperature sensor 5; and an ultrasonic medium temperature sensor 6. The temperature control device 4 includes a temperature comparing device 7, a heating device 8 and a control device 9. In the present embodiment, the heating device 8 is a reactor provided outside the water tank for ultrasonic test, 1. The ultrasonic medium 50 circulates between the water tank for ultrasonic test, 1 and the heating device 8. Alternatively, the ultrasonic medium 50 flows through the heating device 8 and then flows into the water tank for ultrasonic test, 1, and the ultrasonic medium 50 that flows out of the water tank for ultrasonic test, 1 does not return to the heating device 8. A chemical reaction occurs in the heating device 8 and the heating device 8 heats the ultrasonic medium 50 by supplying heat generated by the chemical reaction. As the chemical reaction, there is acombustion reaction of gas fuel or liquid fuel; or a reaction caused by adding water to limewater or quick lime. Each of the test obj ect temperature sensor 5 and the ultrasonic medium temperature sensor 6 is a radiation temperature sensor or a thermo graphy as a noncontact-type temperature sensor. The test object temperature sensor 5 measures a test object temperature as a surface temperature of the test object 60. The ultrasonic medium temperature sensor 6 measures a medium temperature as a surface temperature of the ultrasonic medium 50 stored in the water tank for ultrasonic test, 1.

The ultrasonic test equipment and an ultrasonic test method according to the present embodiment are the same as the ultrasonic test equipment and the ultrasonic test method according to the first embodiment except the points described above.

### (Fourth Embodiment)

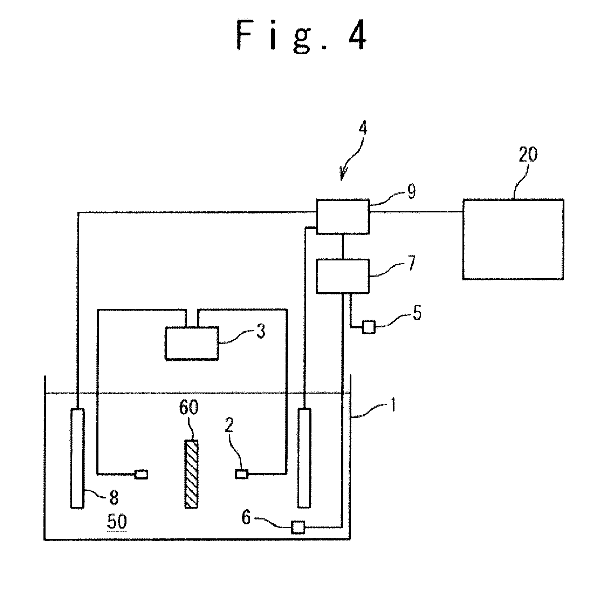

Fig. 4 shows an ultrasonic test equipment according to a fourth embodiment of the present invention. The ultrasonic test equipment according to the present embodiment includes: a water tank for ultrasonic test, 1 that stores ultrasonic medium 50 as liquid; an ultrasonic probe 2 provided in the water tank for ultrasonic test, 1; an information processing device 3; a temperature control device 4; a test object temperature sensor 5; and an ultrasonic medium temperature sensor 6 provided in the water tank for ultrasonic test, 1. The ultrasonic medium 50 is, for example, water. Each of the test object temperature sensor 5 and the ultrasonic medium temperature sensor 6 is a thermocouple as a contact-type temperature sensor. The temperature control device 4 includes a temperature comparing device 7, a heating device 8 provided in the water tank for ultrasonic test, 1, the control device 9 and a cooling device 20. The heating device 8 is an electric heater or a heat pump for heating the ultrasonic medium 50 by using electric power.

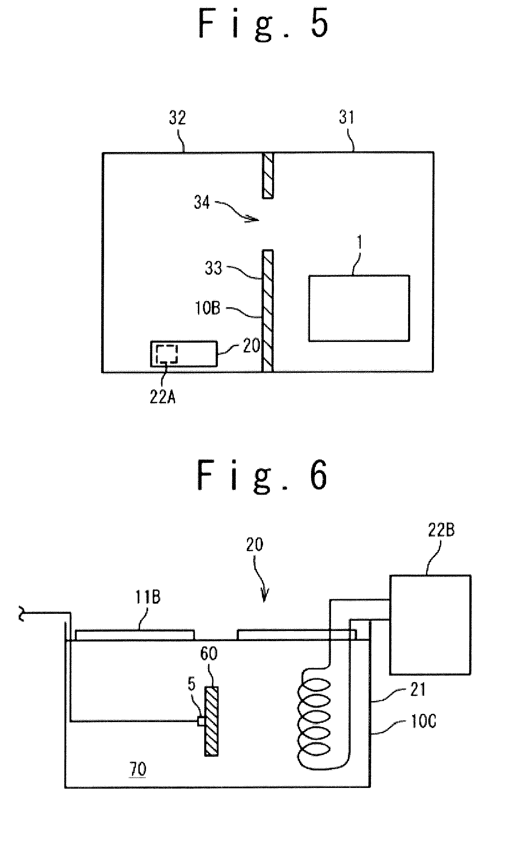

Fig. 5 is a plan view showing an arrangement of the water tank for ultrasonic test, 1 and the cooling device 20. The water tank for ultrasonic test, 1 is arranged in a test room 31. The cooling device 20 includes a refrigerator 22A and functions as a room cooler. A carrying-in entrance 34 is formed in a wall 33 between the test room 31 and a pre-room 32. A door, which is not shown in the figure, is provided at the carrying-in entrance 34. The pre-room 32 is, for example, adjacent to the test room 31. The cooling device 20 is provided, for example, in the pre-room 31.

An ultrasonic test method according to the present embodiment is described below.

The test object 60 is carried into the pre-room 32. The test obj ect temperature sensor 5 measures a test obj ect temperature as a surface temperature of the test object 60 and the ultrasonic medium temperature sensor 6 measures a medium temperature as a temperature of the ultrasonic medium 50. The temperature comparing device 7 detects a high-low relation between the test object temperature and the medium temperature based on a direction of an electromotive force caused by the test object temperature sensor 5 and the ultrasonic medium temperature sensor 6. The control device 9 controls the heating device 8, the cooling device 20 or both of the heating device 8 and the cooling device 20 based on the high-low relation between the test object temperature and the medium temperature such that the medium temperature becomes equal to or higher than the test object temperature. The heating device 8 heats the ultrasonic medium 50 based on the control by the control device 9 such that the medium temperature becomes equal to or higher than the test obj ect temperature. The refrigerator 22A cools air in the pre-room 32 based on the control by the control device 9 such that the medium temperature becomes equal to or higher than the test object temperature. The air in the pre-room 32 functions as heat transfer medium that deprives the test object 60 of heat.

After the medium temperature becomes equal to or higher than the test object temperature, the test object 60 is carried from the pre-room 32 into the test room 31 through the carrying-in entrance 34, and then the test object 60 is immersed in the ultrasonic medium 50.

Under the condition that the test object 60 is being immersed in the ultrasonic medium 50, the ultrasonic test equipment according to the present embodiment performs an ultrasonic test of the test object 60 as same in the first embodiment.

In the present embodiment, when the test object 60 is immersed in the ultrasonic medium 50, the temperature of the ultrasonic medium 50 is equal to or higher than the surface temperature of the test obj ect 60. Therefore, the ultrasonic medium 50 in the vicinity of the test object 60 is cooled by the test object 60 such that the temperature of the ultrasonic medium 50 is lowered and a saturation concentration of dissolved gas is increased therein. As a result, gas bubbles are prevented from emerging on a surface of the test object 60. The effect of preventing gas bubbles from emerging on the surface of the test object 60 is maintained during the ultrasonic test.

It is noted that an air temperature sensor provided in the pre-room 32 can be used as the test object temperature sensor 5 when the test obj ect 60 in the pre-room 32 and the air in the pre-room 32 are in thermal equilibrium. In this case, in order to avoid influences of a tolerance and an instrumental error, it is preferred to control the medium temperature, the test object temperature or both of them such that there arises a finite temperature difference (for example, 2 °C) between the medium temperature and the test object temperature.

In the present embodiment, each of the test object temperature sensor 5 and the ultrasonic medium temperature sensor 6 may be a mercury thermometer, an alcohol thermometer or a thermistor as a contact-type temperature sensor. In this case, the ultrasonic test method is same as that exemplified in the second embodiment.

In the present embodiment, it is preferred that a room temperature of the pre-room 32 is kept lower than a room temperature of the test room 31.

In the present embodiment, it is preferred that the wall 33 is provided with a heat insulating member 10B. The heat insulating member 10B prevents heat from penetrating from the test room 31 to the pre-room 32 and thus reduces energy for cooling the air in the pre-room 32.

### (Fifth Embodiment)

Fig. 6 shows a cooling device 20 of an ultrasonic test equipment according to a fifth embodiment of the present invention. The cooling device 20 includes a cooling water tank 21 for storing cooling water 70 as heat transfer medium that deprives the test object 60 of heat and a refrigerator 22B for cooling the cooling water 70.

The ultrasonic test equipment according to the present embodiment is the same as the ultrasonic test equipment according to the fourth embodiment except the points described above.

An ultrasonic test method according to the present embodiment is described below.

The test object 60 is immersed in the cooling water 70. The test object temperature sensor 5 measures a test object temperature as a surface temperature of the test object 60 and the ultrasonic medium temperature sensor 6 measures a medium temperature as a temperature of the ultrasonic medium 50. The temperature comparing device 7 detects a high-low relation between the test object temperature and the medium temperature based on a direction of an electromotive force caused by the test object temperature sensor 5 and the ultrasonic medium temperature sensor 6. The control device 9 controls the heating device 8, the cooling device 20 or both of the heating device 8 and the cooling device 20 based on the high-low relation between the test object temperature and the medium temperature such that the medium temperature becomes equal to or higher than the test obj ect temperature. The heating device 8 heats the ultrasonic medium 50 based on the control by the control device 9 such that the medium temperature becomes equal to or higher than the test object temperature. The refrigerator 22B cools the cooling water 70 based on the control by the control device 9 such that the medium temperature becomes equal to or higher than the test object temperature.

After the medium temperature becomes equal to or higher than the test object temperature, the test object 60 is taken out from the cooling water 70 and is immersed in the ultrasonic medium 50.

Under the condition that the test object 60 is being immersed in the ultrasonic medium 50, the ultrasonic test equipment according to the present embodiment performs an ultrasonic test of the test object 60 as same in the first embodiment.

Also, in the present embodiment, gas bubbles are prevented from emerging on a surface of the test object 60 as same in the fourth embodiment.

In the present embodiment, it is preferred that the cooling water tank 21 is provided with a heat insulating member 10C. The heat insulating member 10C reduces energy for cooling the cooling water 70.

It is also preferred that a floating member 11B is floated on the cooling water 70. The floating member 11B suppresses heat transfer through a liquid surface of the cooling water 70. Therefore, energy for cooling the cooling water 70 is reduced. It is preferred to use expanded polystyrene as the floating member 11B.

### (Sixth Embodiment)

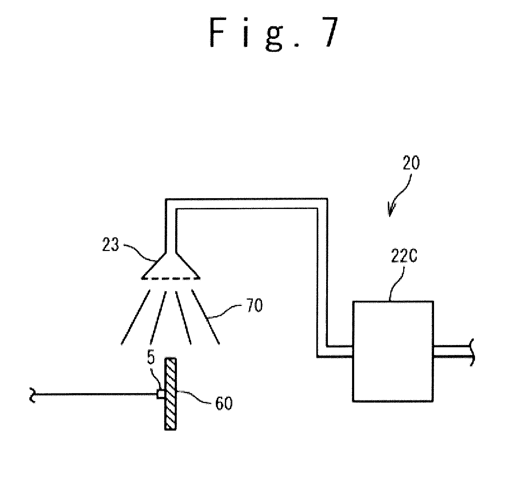

Fig. 7 shows a cooling device 20 of an ultrasonic test equipment according to a sixth embodiment of the present invention. The cooling device 20 includes a refrigerator 22C for cooling cooling water 70 as heat transfer medium that deprives the test object 60 of heat and a shower 23 for pouring the cooling water 70 on the test object 60.

The ultrasonic test equipment according to the present embodiment is the same as the ultrasonic test equipment according to the fourth embodiment except the points described above.

An ultrasonic test method according to the present embodiment is described below.

The shower 23 pours the cooling water 70 on the test object 60. The test object temperature sensor 5 measures a test object temperature as a surface temperature of the test object 60 and the ultrasonic medium temperature sensor 6 measures a medium temperature as a temperature of the ultrasonic medium 50. The temperature comparing device 7 detects a high-low relation between the test object temperature and the medium temperature based on a direction of an electromotive force caused by the test object temperature sensor 5 and the ultrasonic medium temperature sensor 6. The control device 9 controls the heating device 8, the cooling device 20 or both of the heating device 8 and the cooling device 20 based on the high-low relation between the test object temperature and the medium temperature such that the medium temperature becomes equal to or higher than the test obj ect temperature. The heating device 8 heats the ultrasonic medium 50 based on the control by the control device 9 such that the medium temperature becomes equal to or higher than the test object temperature. The refrigerator 22B cools the cooling water 70 based on the control by the control device 9 such that the medium temperature becomes equal to or higher than the test object temperature.

After the medium temperature becomes equal to or higher than the test object temperature, the test object 60 is immersed in the ultrasonic medium 50.

Under the condition that the test object 60 is being immersed in the ultrasonic medium 50, the ultrasonic test equipment according to the present embodiment performs an ultrasonic test of the test object 60 as in the first embodiment.

Also, in the present embodiment, gas bubbles are prevented from emerging on a surface of the test object 60 as same in the fourth embodiment.

In the fourth to sixth embodiments, the heating device 8 may not be provided.

Also, in the second to sixth embodiments, it is preferred that the water tank for ultrasonic test, 1 is provided with the heat insulating member 10A and that the floating member 11A is floated on the ultrasonic medium 50.

It is noted that the above embodiments can be combined.

The present invention has been described with reference to the embodiments; however, the present invention is not limited to the above embodiments. Various modifications can be applied to the above embodiments.

This application is based upon and claims the benefit of priority from Japanese Patent Application No. 2008-185894, filed on July 17, 2008, the disclosure of which is incorporated herein in its entirely by reference.

## Claims

1. An ultrasonic test equipment comprising:
a water tank for storing ultrasonic medium;
an ultrasonic probe provided in said water tank;
an ultrasonic medium temperature sensor configured to measure a first temperature of said ultrasonic medium;
a test object temperature sensor configured to measure a second temperature of a test object; and
a temperature control device,
wherein said temperature control device heats said ultrasonic medium or cools said test object such that said first temperature becomes equal to or higher than said second temperature.

2. The ultrasonic test equipment according to claim 1, wherein said temperature control device includes a refrigerator configured to cool heat transfer medium for depriving said test object of heat.

3. The ultrasonic test equipment according to claim 2, wherein said test object is carried from a pre-room into a test room in which said water tank is arranged, and
said heat transfer medium is air in said pre-room.

4. The ultrasonic test equipment according to claim 2, wherein said temperature control device includes a cooling water tank for storing cooling water as said heat transfer medium.

5. The ultrasonic test equipment according to claim 2, wherein said temperature control device includes a shower configured to pour cooling water as said heat transfer medium on said test object.

6. The ultrasonic test equipment according to any of claims 1 to 5, wherein said temperature control device includes an electric heater or a heat pump for heating said ultrasonic medium.

7. The ultrasonic test equipment according to any of claims 1 to 5, wherein said temperature control device includes a solar water heater configure to heat said ultrasonic medium.

8. The ultrasonic test equipment according to any of claims 1 to 5, wherein said temperature control device includes a reactor in which a chemical reaction occurs, and
said reactor supplies said ultrasonic medium with heat generated by said chemical reaction.

9. An ultrasonic test method comprising:
measuring a first temperature of ultrasonic medium stored in a water tank;
measuring a second temperature of a test object;
heating said ultrasonic medium or cooling said test object such that said first temperature becomes equal to or higher than said second temperature;
immersing said test object in said ultrasonic medium; and
performing an ultrasonic test of said test object.

10. The ultrasonic test method according to claim 9, further comprising cooling heat transfer medium for depriving said test object of heat.

11. The ultrasonic test method according to claim 10, wherein said heat transfer medium is air in a pre-room, and
the ultrasonic test method further comprising carrying said test object from said pre-room into a test room in which said water tank is arranged.

12. The ultrasonic test method according to claim 10, wherein said heat transfer medium is cooling water stored in a cooling water tank, and
said heating said ultrasonic medium or said cooling said test object includes immersing said test object in said cooling water.

13. The ultrasonic test method according to claim 10, wherein said heat transfer medium is cooling water, and
said heating said ultrasonic medium or said cooling said test object includes pouring said cooling water on said test object.

14. The ultrasonic test method according to any of claims 9 to 13, wherein said heating said ultrasonic medium or said cooling said test object includes heating said ultrasonic medium.

15. The ultrasonic test method according to claim 14, wherein in said heating said ultrasonic medium, said ultrasonic medium is heated by using solar heat.

16. The ultrasonic test method according to claim 14, wherein in said heating said ultrasonic medium, said ultrasonic medium is supplied with heat generated by a chemical reaction.
